# EUROPEAN PATENT APPLICATION

(11) **EP 3 644 205 A1**
(43) Date of publication of application: **29.04.2020**
(21) Application number: 18202617.9
(22) Date of filing: 25.10.2018
(51) Int. Cl.: G06F 21/60, G06Q 10/08, G06K 19/00, G06Q 50/04, H04L 9/32

(54) **METHOD FOR MONITORING OF COMPONENTS THAT ARE CONSUMED DURING THE PRODUCTION PROCESS FOR A PRODUCT**

(71) Applicant: Siemens Aktiengesellschaft, 80333 München (DE)
(72) Inventor: FISCHER, Michael, 8932 Mettmenstetten (CH)
(74) Representative: Maier, Daniel Oliver

(57) **Abstract**

It is the objective of the present invention to provide a method for monitoring and/or controlling the energy cost for the production of a product lot using a manufacturing execution system (MES) that enables the operator of a production facility to optimize the production process in terms of energy consumption and energy cost, too.

This objective is achieved according to the present invention by a method for monitoring and/or controlling the energy cost for the production of a product lot using a manufacturing execution system, comprising the step of:
a) executing a production process being scheduled and controlled by the manufacturing execution system to produce the product lot; said production process having a number of scheduled production steps;
b) for each individual production step measuring the energy consumption over the course of the execution of the individual production step for this specific product lot;
c) creating a data model within the manufacturing execution system that correlates production specific data and the energy consumption data related to this product lot;
d) defining commands to manage the production specific data and the energy consumption data wherein the commands are designed as web APIs, preferably as RESTful web APIs; and
e) evaluating the production specific data and the energy consumption data and creating an energy consumption profile for the production process related to this produced product lot.

## Description

The invention relates to a method for securely monitoring of components that are consumed during the production process for a product using a manufacturing execution system (MES). Most recently, the term Manufacturing Operation Management (MOM) is more and more used to replace the term MES.

As defined by the Manufacturing Enterprise Solutions Association (MESA International), a MES/MOM system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." In addition, the ISA-95 standard describes in detail the meaningful resources that a manufacturing process has to consider in order to optimize and streamline the production process. The focus is in particular on the management of materials, equipment, tools and personnel.

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES/MOM products under its SIMATIC IT® product family.

MES- or MOM systems, like SIMATIC IT, manage and monitor the production of a vast diversity of products. During the engineering part, the production plant is modelled and the BOM and BOP lists for the production process are generated. Once a production order comes in from an ERMS system (Enterprise resource management system, such as a SAP system), the production process is scheduled and executed. During the production execution, the production process itself consumes a determined number of goods and intermediate products which are supplied either JIT or from the warehouse of the production facility. Depending on the product to be produced, the parts from the inventory can be sometimes quiet expensive and need to be handled with extra care which also applies for the monitoring of the number of parts(components) on inventory. On the other hand, in modern work flows, suppliers of parts have direct access to the warehouse of the producer and dispose of the parts that have been ordered by the producer, usually according to the BOM list. For this filling and consuming process the MES systems are usually able to register the parts that are actually used in the production, for example in particular for the track and trace part of the MES system. Nonetheless, filling and removing of parts/components in the warehouse is a rather manual process which is handled either very classical by delivery note or by handheld devices that are used by personnel for scanning codes disposed on the parts, such as bar or QR codes.

Nevertheless, there remains a certain gap in the monitoring of the movement of the parts during delivery and removal. As already explained above, most of the parts that are delivered are either scanned or registered by hand during their arrival in the production facility, i.e. similar to the scanning of postal items arriving in a sorting facility. The problem still remains that the owner of the production plant cannot be sure for 100% whether a part/component delivered eventually arrives in its predetermined storing slot in the warehouse/inventory and whether a part removed from there actually has been consumed during the production process.

It is therefore the objective of the present invention to provide a method for securely monitoring of components that are consumed during the production process for a product using a manufacturing execution system (MES).

This objective is achieved according to the present invention by a method for secure monitoring of components that are consumed during the production process for a product, comprising the steps of:
a) executing a production process being scheduled and controlled by a manufacturing execution system to produce the product;
b) storing at least a part of the components required during the production process in a warehouse having a number of storing slots for the components;
c) associating at least one of the storing slots with detections means that are enabled to register an incoming component supplied to this storing slot and/or an outgoing component removed from this storing slot;
d) storing the detected event of supply of a component and/or the event of removal of the component as a transaction to a node of a blockchain; and
e) monitoring the number of components stored in the storing slot according to the chain of transactions stored in the node of the blockchain.

Therefore, the present invention safeguards the correct delivery and removal of parts/components to the warehouse of a production facility, in particular of expensive components/parts, in monitoring the number of parts that are stored in the warehouse. The trustful block chain procedure optionally combined with the specifically authorized access of persons to the determined storing slot reduces the risk of fraud to a high extent.

In an useful embodiment of the present invention, the detection means may comprise a bar code reader, wherein the component has to be registered when supplied to or removed from the storing slot.

In addition or alternatively, the detection means may comprise a RFID receiver, wherein the component comprises an RFID tag that is registered with the RFID receiver when the component is supplied to or removed from the storing slot. Advantageously, the storing slot may be equipped with an RFID receiver receiving discontinuously ID signals from the RFID tags attached to the components that are stored in the respective storing slot.

Further, the detection means may comprise a video camera, wherein the video camera is enabled to record a supply event and/or a removal event related to the components stored in the storing slot.

In order to personalize the supply and/or remove event, the detection means may comprise a detection unit being enabled to detect the identity of person supplying components to the storing slot and/or removing components from the storing slot. The detection unit can be a smart card reader or a fingerprint sensor or the like. This measure enables the method to allow access to the storing slot to an authorized person only.

Further, the objective of the present invention is solved by a computer program product for performing steps of the method according to any of claims 1 to 6.

Preferred but not exclusive embodiments of the invention will now be described with reference to the accompanying drawings, which depict in:
- Figure 1: schematically a warehouse and the method for securely monitoring the components stored in the warehouse;
- Figure 2: schematically a structure of the content of a node of a blockchain, and
- Figure 3: schematically the principles of the access to the blockchain with its data sinks and data sources.

The present invention lays in the technical field of manufacturing execution systems (MES/MOM). By way of nonlimiting example, reference will be made to the architecture of the SIMATIC IT Unified Architecture Foundation (in short, SIT UAF) product of Siemens Corp.

SIMATIC IT Unified Architecture Foundation is a platform for creating an integrated MES/MOM ecosystem, targeting the current and future transformational technologies that are shaping the future of manufacturing: mobile internet, automation of knowledge work, the Internet of Things, and the Cloud. At the core of SIT UA Foundation is a unified manufacturing operations data bus that provides a common backbone for the integration of legacy applications while providing the first fundamental step towards a unified integrated system.

In a nutshell, SIT UAF is:
- the platform approach to creating a Manufacturing Operations Management strategy
- The core element for executing, tracking and monitoring production progress and performance
- The data bridge between PLM and Shop Floor Automation, to create the Digital Enterprise

SIT UAF is constructed around Domain Driven Design (DDD). Application data, services and events are defined by a model setting out the application structure and exposed as meta-data at any layer.

SIT UAF includes common MOM components and services for connecting external systems, aggregating and exposing data, defining plant models and connecting the underlying automation data and systems.

An overview of the product can be found in the document "SIMATIC IT Unified Architecture Foundation", available on the website www.siemens.com.

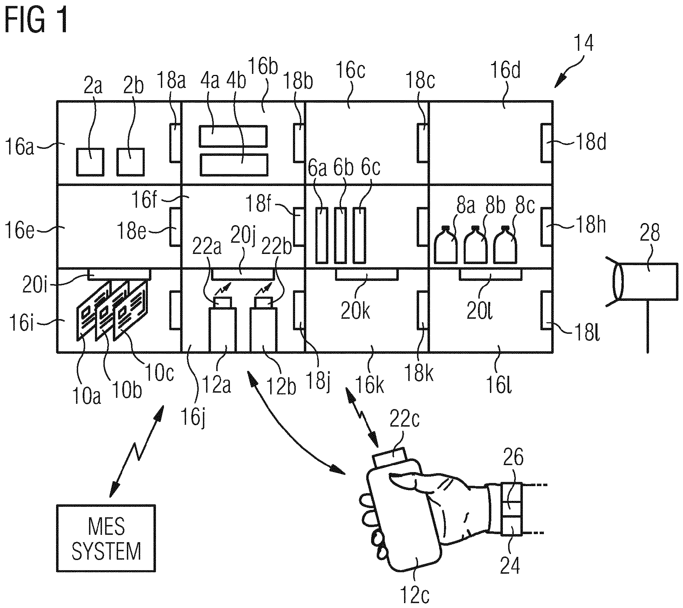

The present invention now provides a solution for secure monitoring of components that are consumed during the production process for a product. As shown in Figure 1, components 2a, 2b, 4a, 4b, 6a, 6b, 6c, 8a, 8b, 8c, 10a, 10b, 10c, 12a and 12b are stored in a warehouse 14 of a production plant (not shown in detail). The warehouse 14 comprises a number of storing slots 16a to 161 which are equipped with a combined RFID/barcode reader 18a to 181. Some of the storing slots 16i to 161 are equipped with a further RFID receiver 20i to 201. The RFID/barcode readers 18a to 181 are connected to the data handling instances of the MES system which manages the production of the products in the production facility. Therefore, the MES system is aware of any data exchange that happens during a supply event to and a remove event from a storing slot 16a to 161.

The process is now described in more detail in terms of the supply of a component 12c to the storing slot 16j. The component, here for example a container 12c containing an expensive ingredient for the production of a food or convenience product (i.e. an ingredient for a perfume), is equipped with an RFID transponder 22c. This RFID transponder 22c is programmed to broadcast discontinuously a data set as a component-ID which comprises in this example a code for the component, a code for the supplier and the data when the component has been completed at the supplier. When now a person brings the component 12c into the proximity of the RFID reader 18j of the respective storing slot 16j, the RFID reader 18j receives the data set and forwards the received data set to the MES system which assigns the component 12c to the storing slot 16j. Coincidently, the RFID reader 18j responds upon the receipt of the data set with a time stamp that is added to the data set kept by the RFID transponder 22c. When the component 12c is now stored in the storing slot 16j, the RFID receiver 20j discontinuously receives the data set plus the time stamp and confirms the presence of the component 12c in the storing slot 16j by sending a respective confirmation via a data link (i.e. wireless link) to the MES system. Once the MES system reveives this confirmation, the data set plus time stamp is forwarded to the node N of a blockchain B where this event is stored as a transaction T.

A similar procedure will cover the remove event. When a worker would like to remove the component 12c from the storing slot 16j, its identity will be read by the RFID reader 18j allowing the MES system to determine whether this worker is assigned an access to the storing slot 16j or not. When the worker removes the component 12c from the storing slot 16j, two events will happen. First, the RFID reader 18j will read the data set send out by the RFID transponder 22c and transmits this data set to the MES system. Second, the MES system will notice after receipt of the next transmission from the RFID transponder 20j that the respective data set from the RFID transponder 22c is no longer present. This means that the component 12c has been removed from the storing slot 16j. The presence of the component 12c can now be detected for example at a fill-in station where the content of the container of the component 12c is emptied into a batch reactor or the like. This example shall represent the event of further tracking of the component 12c during the consumption in the production process.

In addition to this supply and remove events, the warehouse 14 can be further equipped with a camera 28 which will also record in sequences the respective supply or remove event. This sequence can also be added by the MES system to the data set representing the supply or remove event. Together with the other content of the data set, the sequence forms part of the transaction that is stored in the blockchain.

Further, in this example the person who brings the component 12c to the storing slot 16j wears a wristlet 24 that also bears a RFID transponder 26 that broadcast a data set identifying the supplier of the component 12c. This data set can also be received by the RFID reader 18j and will be added to the data set maintained in the RFID transponder 22c of the component 12c.

The before mentioned data set plus time stamp plus supplier personal ID is kept by the MES system in a data record Tij. In the nomenclature of the blockchain technology this data record Tij is called a transaction Tij. This transaction Tij is stored in a node Nᵢ of a blockchain network K, where i denotes the index of the node in said blockchain and j the index of a transaction in said Node Nᵢ.

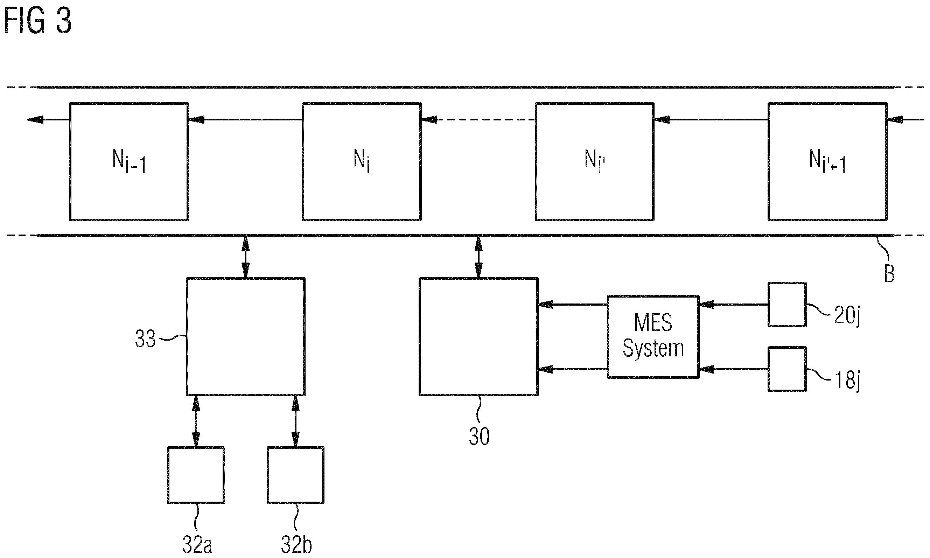

Since a blockchain K is a decentralized, distributed ledger that is used to record transactions, there is a need for feeding data - in the terminology of blockchain technology «transcations» to a blockchain. This feeding (syn pushing) of «transactions» is done by a so-called Oracle 30. Reference is made to FIG 3. FIG 3 depicts an interworking structure of entities and components in the MES system. According to the component supply as depicted in FIG 1, all generated data records Tij are sent as supply/remove events via the oracle 30 to a dedicated blockchain K. More precisely: A data records Tij is received as a transaction by an oracle 30. The oracle 30 pushes said transaction into the node Nᵢ of the blockchain K. The blockchain K itself is not depicted in FIG 3, since technically decentralized. Each supply/remove event respectively a transaction forms one data set of the blockchain node Nᵢ.

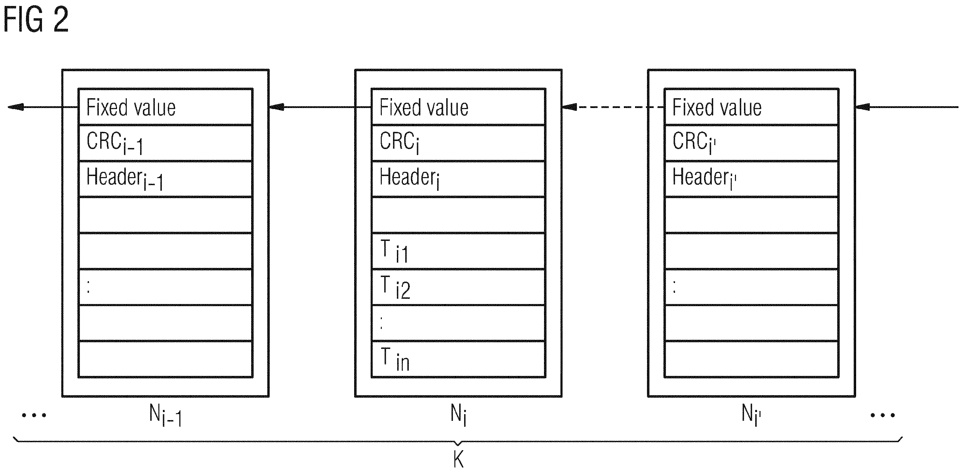

Regarding the structure of the entries in a node Nᵢ reference is made to FIG 2. For each node Nᵢ there is according to the blockchain technology a field CRC, which contains a hash value of the previous node Nᵢ₋₁ of said blockchain K. This hash value can be generated e.g. via SHA-256 (Secure Hash Algorithm). FIG 2 shows the principle, each entry respectively transaction has to be understood as a data record Tij.

A entrance of supply/remove event data records is determined by the following components of the blockchain technology. The oracle 30 interacts with a smart contract 33. Generally, a smart contract 33 is a computer protocol intended to digitally facilitate, verify, or enforce the negotiation or performance of a real contract. More specifically a smart contract 33 is «a computerized transaction protocol that executes the terms of a contract». A blockchain-based smart contract 33 is visible to all parties of said blockchain. Smart contracts 33 allow the performance of credible transactions without external parties or authorities. These transactions, here the supply event of the component 12c or the remove event of the component 12c are trackable and irreversible.

More precisely in the context of the present invention the oracle 30 checks if a smart contract 33 is available and if so the oracle 33 pushes a new transaction into a node Nᵢ of the blockchain K.

In order to represent the data set in the BlockChain network K a special BlockChain component is required that is trusted by the network and which is also able to interface the devices producing the identification events and verify the information produced by them (here the various RFID transponders 18j, 20j). Such components are called in the BlockChain technology oracles 30. Some smart contracts need information directly from the physical world, as e.g. in the environment of the present document: number of components supplied to or removed from the storing slot 16j. The biggest challenge for oracles is the ability to report readings without sacrificing data security and data integrity.

In this particular environment of the MES system there is an absolute prerequisite to guarantee data security and data integrity. For this reason, the oracle 30 is a so-called hardware oracle.

For the present invention a smart contract 33 may be generated and provided on a blockchain K such that this smart contract 33 is configured to automatically validate blockchain transactions. This configuration causes a specific entry in a so-called wallet 32a, 32b. An entry contains the information
- whether a party either adds a transaction which is in the meaning of the present invention a supply event or a remove event for the component 12c,
   or
- whether a party takes one or more copies of said data records Tij the blockchain K. Party has to be understood in this context as the operator of the production facility incl. its personnel and as the divers suppliers incl. its employees.

The accumulated number of data records is stored in this wallet 32a, 32b. For the sake of completeness usage of these data records has to be understood either a delivery of data records or taking a copy from a node Ti of said blockchain K.

Periodically, these entries in the wallet can be billed among the parties within these wallet 32a, 32b according of the number of components supplied or removed. For the supply event, the supplier may receive the compensation in money as agreed upon in the smart contract. Therefore, the number of components supplied will automatically initiate a money transfer from the operator to the supplier according to the agreed prize for the component. A remove event together with the next detection of the component in the production environment will assign the price for the component to the production cost of this lot of product.

For the management and configuration of all these smart contracts 33 and wallets 32a, 32b a collaboration platform is provided, which configures the definitions of said smart contracts 33 and which may cause a billing among the partners according to the entries in the wallets 32a, 32b. Preferably, this collaboration platform is operated either by an independent organisation in trust or a platform that is trusted among the operator and the supplier.

## Claims

1. Method for secure monitoring of components (2 to 12) that are consumed during the production process for a product, comprising the steps of:
a) executing a production process being scheduled and controlled by a manufacturing execution system (MES system) to produce the product;
b) storing at least a part of the components (2 to 12) required during the production process in a warehouse (14) having a number of storing slots (16a to 161) for the components (2 to 12);
c) associating at least one of the storing slots (16a to 161) with detections means (18a to 181, 20i to 201) that are enabled to register an incoming component (2 to 12) supplied to this storing slot (16a to 161) and/or an outgoing component (2 to 12) removed from this storing slot (16a to 161) ;
d) storing the detected event of supply of a component (2 to 12) and/or the event of removal of the component (2 to 12) as a transaction (T) to a node (N) of a blockchain (B); and
e) monitoring the number of components (2 to 12) stored in the storing slot (16a to 161) according to the chain of transactions (T) stored in the node (N) of the blockchain (B).

2. The method according to claims 1, wherein the detection means comprise a bar code reader, wherein the component has to be register when supplied to or removed from the storing slot.

3. The method according to claim 2, wherein the detection means comprise a RFID receiver (18a to 181), wherein the component (2 to 12) comprises an RFID tag (22a to 22c) that is registered with the RFID receiver (18a to 181) when the component (2 to 12) is supplied to or removed from the storing slot (16a to 161).

4. The method according to claim 3, wherein the storing slot (16i to 161) is equipped with an RFID receiver (20i to 201) receiving discontinuously ID signals from the RFID tags (22a to 22c) attached to the components (12a to 12c) that are stored in the respective storing slot (16j).

5. The method according to any of the preceding claims, wherein the detection means comprise a video camera (28), wherein the video camera (28) is enabled to record a supply event and/or a removal event related to the components (2 to 12) stored in the storing slot (16a to 16j).

6. The method according to any of the preceding claims, wherein the detection means comprise a detection unit being enabled to detect the identity of person supplying components to the storing slot and/or removing components from the storing slot.

7. A computer program product for performing steps of the method according to any of claims 1 to 6.
